# FASCICULE DE BREVET EUROPEEN

(11) **EP 2 959 759 B1**
(45) Date de publication et mention de la délivrance du brevet: **14.08.2019**
(21) Numéro de dépôt: 15306000.9
(22) Date de dépôt: 25.06.2015
(51) Int. Cl.: A01B 59/043, A01D 67/00

(54) **MACHINE AGRICOLE MUNIE D'UN DISPOSITIF DE CENTRAGE**
LANDWIRTSCHAFTLICHE MASCHINE, DIE MIT EINER ZENTRIERVORRICHTUNG AUSGESTATTET IST
AGRICULTURAL MACHINE PROVIDED WITH A CENTRING DEVICE

(30) Priorité: 26.06.2014 FR 1455995
(43) Date de publication de la demande: 30.12.2015
(73) Titulaire: Kuhn SA (Societe Anonyme), 67700 Saverne (FR)
(72) Inventeur: SPEICH, Cédric, 67500 HAGUENAU (FR); HOERNER, Yannick, 57660 ERSTROFF (FR); STOCK, Paul-David, 57370 ST JEAN KOURTZERODE (FR)
(74) Mandataire: Nuss, Laurent

(56) Documents cités:
- EP-A1- 1 522 213
- EP-A1- 1 597 953
- FR-A1- 2 933 568

## Description

La présente invention concerne le domaine du machinisme agricole, plus particulièrement les machines agricoles portées par un engin tracteur muni d'un dispositif d'attelage à trois points et devant être déplacées entre une position abaissée de travail, en appui ou à proximité du sol (généralement en appui sur des moyens de roulement), et une position relevée de manoeuvre ou de transport.

L'invention a pour objet une telle machine agricole comportant un dispositif de centrage automatique.

Un domaine d'application privilégiée de l'invention correspond aux machines agricoles pour la récolte des fourrages, plus particulièrement les machines de fenaison. Une machine de fenaison est notamment une machine pour l'andainage ou pour le fanage des végétaux étendus au sol et comporte, par exemple, au moins un rotor avec des fourches pouvant être animé en rotation autour d'un axe sensiblement vertical (connu par l'homme du métier sous la désignation "giro-andaineur") ou légèrement incliné vers l'avant (connu par l'homme du métier sous la désignation "giro-faneur").

Ce type de machines comporte un élément support allongé, généralement sous la forme d'un timon plus ou moins central et d'un bâti ou cadre d'attelage, généralement sous la forme d'un arceau, qui sont articulés l'un à l'autre au moyen d'un axe sensiblement vertical d'articulation.

Pendant le travail, le timon peut librement pivoter autour de cet axe, de sorte que la machine (avec son outil de travail reposant sur le sol au moyen de roulettes) peut suivre une trajectoire courbe imposée par le tracteur. Dans ces conditions, l'axe d'articulation empêche un ripage excessif des roulettes au sol.

Pour les manoeuvres ou pour le transport, la machine est relevée à distance du sol au moyen du relevage trois points du tracteur. La machine présente alors une garde au sol compatible avec le passage au-dessus d'andains ou d'obstacles, ou avec son transport sur route ouverte. Dans ces conditions, il est nécessaire, d'une part, que le timon soit centré par rapport à l'arceau d'attelage, de sorte que la machine soit en ligne avec le tracteur. D'autre part, la machine doit demeurer verrouillée dans cette position centrée, au moins à concurrence d'une certaine valeur d'accélération latérale au-delà de laquelle il peut être éventuellement envisagé que le timon soit autorisé à pivoter autour de l'axe d'articulation.

Différents dispositifs destinés à assurer cette double fonction (recentrage et verrouillage en position centrée) sont déjà connus dans l'état de la technique.

Par le document FR 2 933 568, on connaît une machine agricole du type décrit précédemment, comportant un dispositif de centrage pour l'élément support qui intègre un levier basculant monté sur le bâti d'attelage et déplacé lors du levage de la machine. Ce levier basculant est pourvu d'une première surface de centrage apte à coopérer, en position relevée de la machine, et donc en position basculée du levier, avec une seconde surface de centrage portée par une partie frontale de l'élément support. Concrètement, l'une des surfaces de centrage correspond à une surface cunéiforme interne d'une mâchoire et l'autre correspond à une surface extérieure complémentaire d'un nez.

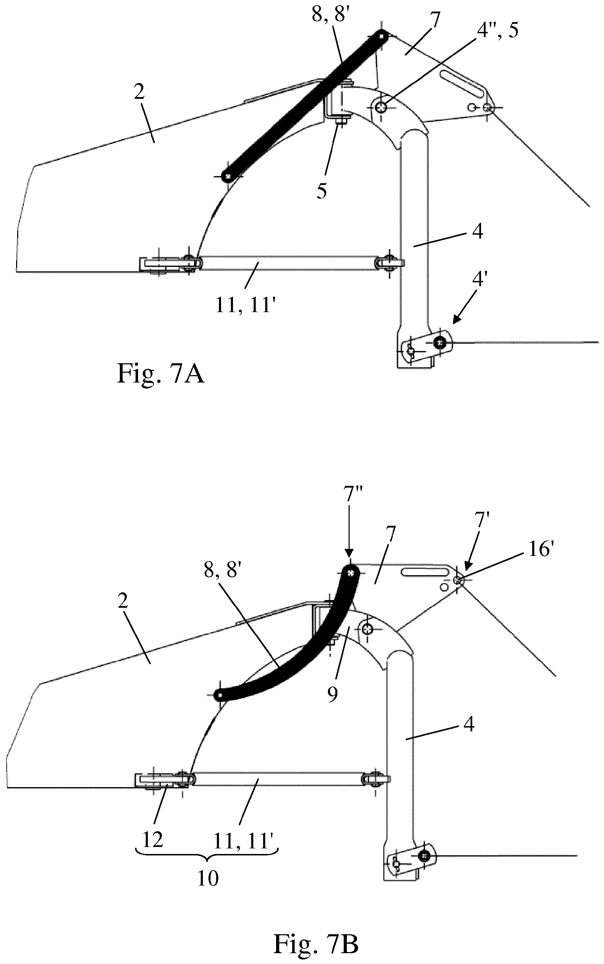

Néanmoins, cette solution connue présente au moins les inconvénients suivants :
- Pour avoir un débattement angulaire suffisamment important au travail, il est nécessaire d'élargir la mâchoire de centrage 20 (voir figure 7 du document) dans la direction transversale, de sorte à éloigner l'une de l'autre les deux positions latérales extrêmes que peut occuper le nez 18 au sein de cette mâchoire de centrage 20. Ceci rend alors le dispositif encombrant. En sus, cet élargissement a pour effet que la "pente" de la mâchoire de centrage 20 est moins inclinée, d'où un recentrage plus difficile à assurer, notamment si la machine est en dévers.
- Si la mâchoire de centrage 20 doit conserver une pente suffisamment élevée pour garantir un bon recentrage, ceci avec une mâchoire 20 plus large pour augmenter le débattement angulaire au travail, alors la mâchoire 20 doit être plus profonde dans la direction d'avancement de la machine. Autrement dit, la partie centrale de la mâchoire 20, où vient se bloquer le nez 18 en position centrée, est alors longitudinalement plus éloignée des "coins" de la mâchoire 20 où le nez 18 vient se placer dans les positions angulaires extrêmes du timon 10. Dans ce cas, l'affaissement de la machine en position relevée pour le transport est plus important. La réduction concomitante de la garde au sol n'est pas souhaitable.

Des limitations similaires peuvent être relevées pour les solutions proposées par les documents FR 2 382 177 et EP 0 346 701.

Le document DE 10 2006 023 179 décrit et illustre un dispositif de centrage pour une machine agricole relevable, du type giro-faneur, utilisant le relevage pour effectuer le centrage et maintenant un alignement par contrainte élastique en position abaissée de travail.

A chacun des deux points d'accouplement inférieur du châssis d'attelage est associé un levier basculant en deux parties 15, 16 articulées entre elles, ledit levier étant relié à une barre télescopique 9 ou 10 sollicitée en extension par un ressort 19. Ce dernier doit donc pouvoir assurer à la fois un centrage souple en position de travail et un centrage suffisamment rigide en position relevée.

Le dispositif de centrage proposé par ce document DE présente donc une structure double, de grande dimension et encombrant la zone inférieure du dispositif d'attelage.

De plus, un centrage efficace et précis en position relevée nécessite une commande et un fonctionnement parfaitement équilibrés entre les deux sous-ensembles indépendants formant le dispositif de centrage, ce qui ne peut être forcément garanti.

Enfin, un tel dispositif de centrage n'est pas compatible avec la mise en oeuvre d'un système de triangulation ou de reprise d'efforts.

Par ailleurs, des solutions alternatives mettant en oeuvre : des actionneurs hydrauliques alimentés par la pression hydraulique du tracteur (EP 0 064 292), des ressorts agissant au niveau de deux éléments porteurs reliant la machine au tracteur (DE 2 216 339) ou encore des moyens séparés et additionnels assurant l'un le centrage et l'autre le verrouillage (EP 0 370 304), sont également connus.

Toutefois, ces solutions alternatives présentent des constructions complexes et coûteuses et ne font pas état d'une fiabilité et/ou de performances satisfaisante(s).

Le problème posé à la présente invention consiste à surmonter les inconvénients des solutions précitées et de proposer, dans le contexte exposé ci-dessus, une solution constructivement simple et peu encombrante, exploitant le mouvement de relevage de la machine agricole, apte à assurer avec les mêmes moyens le centrage et le maintien en position centrée et apte à réaliser un centrage depuis une plage de débattement angulaire importante, dans laquelle la partie à centrer de la machine peut librement se déplacer en position abaissée ou de travail.

A cet effet, l'invention a pour objet une machine agricole, selon le préambule de la revendication 1 et présentant en combinaison les caractéristiques de la partie caractérisante de cette revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
Les figures 1 et 2 sont des vues respectivement de dessus et en élévation d'un ensemble fonctionnel [tracteur + machine agricole], comprenant une machine agricole selon un mode de réalisation de l'invention ;
Les figures 3A et 3B sont des vues partielles en élévation latérale de la machine agricole des figures 1 et 2 illustrant les états du dispositif de centrage en fonction de l'état relevé ou abaissé de la machine agricole, le timon étant centré ou aligné en position relevée et décentré ou non aligné (incliné) en position abaissée ;
Les figures 3C et 3D sont des vues partielles de dessus correspondant respectivement aux figures 3A et 3B ;
La figure 4 est une vue partielle en perspective de la machine agricole de la figure 1 montrant le dispositif de centrage et le dispositif de triangulation, et leur connexion avec l'arceau d'attelage et avec le timon ;
La figure 5 est une représentation de détail à une échelle différente du dispositif de centrage représenté figures 3A et 3C ;
La figure 6 est une vue similaire à celle de la figure 4, illustrant une variante de réalisation au niveau du dispositif de triangulation ;
Les figures 7A et 7B sont des vues partielles en élévation latérale illustrant un autre mode de réalisation du dispositif de centrage, agissant en traction, respectivement représenté en position relevée de la machine agricole (position centrée forcée du timon - figure 7A) et en position abaissée de la machine agricole (liberté de mouvement latéral limitée pour le timon - figure 7B), et,
Les figures 8A et 8B sont des vues partielles de dessus de la machine agricole, illustrant un troisième mode de réalisation des dispositifs de centrage et de triangulation, respectivement à l'état relevé (timon centré et aligné) de la machine et à l'état abaissé (timon décentrée ou incliné), ce mode de réalisation mettant en oeuvre des moyens hydrauliques.

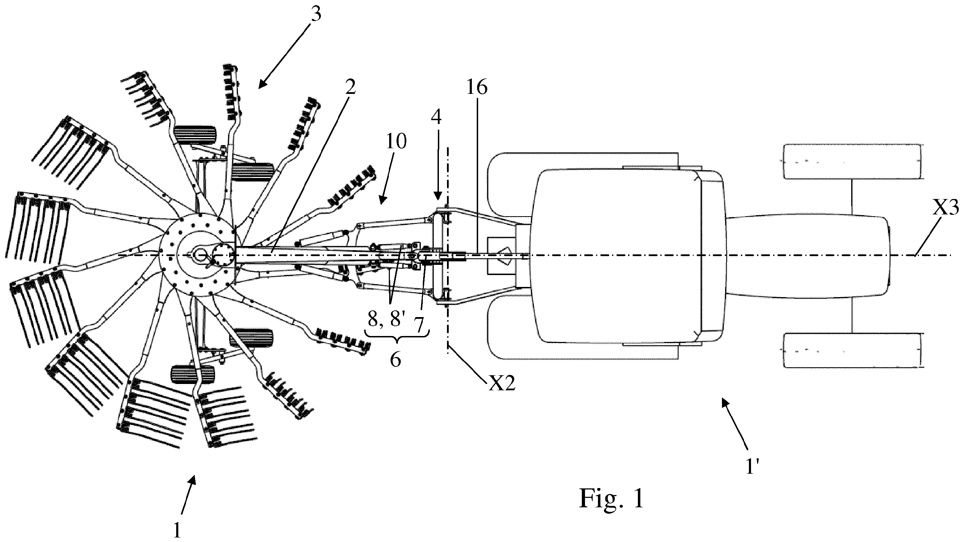

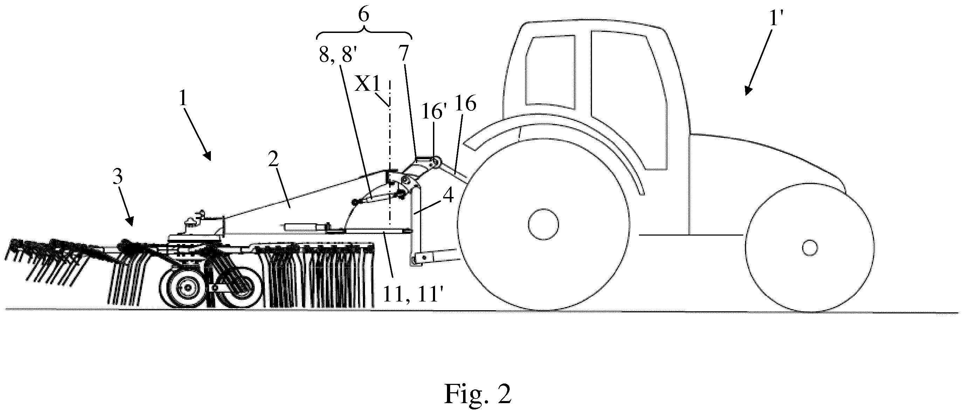

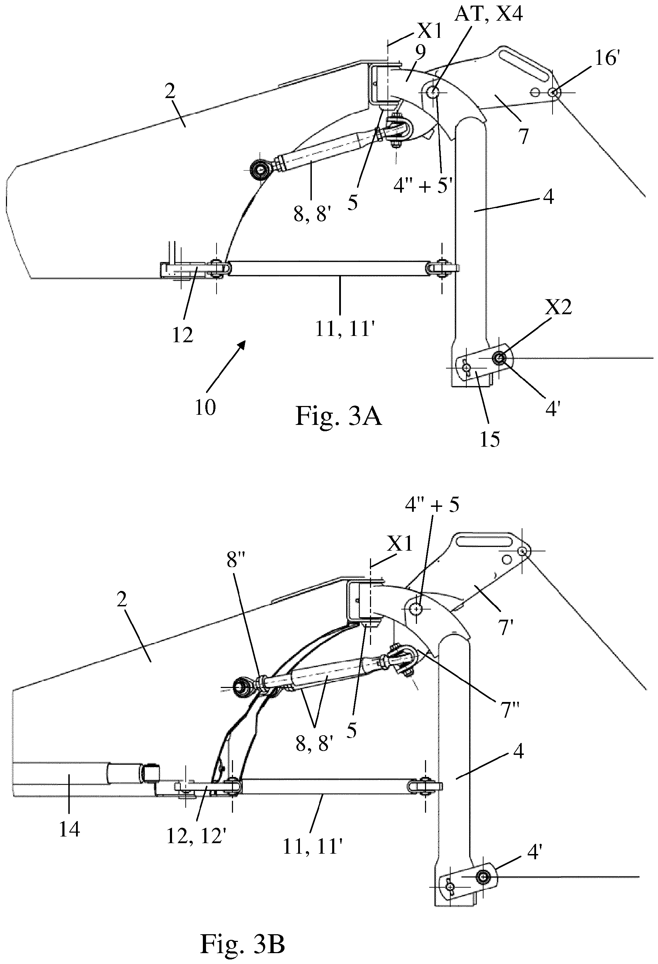

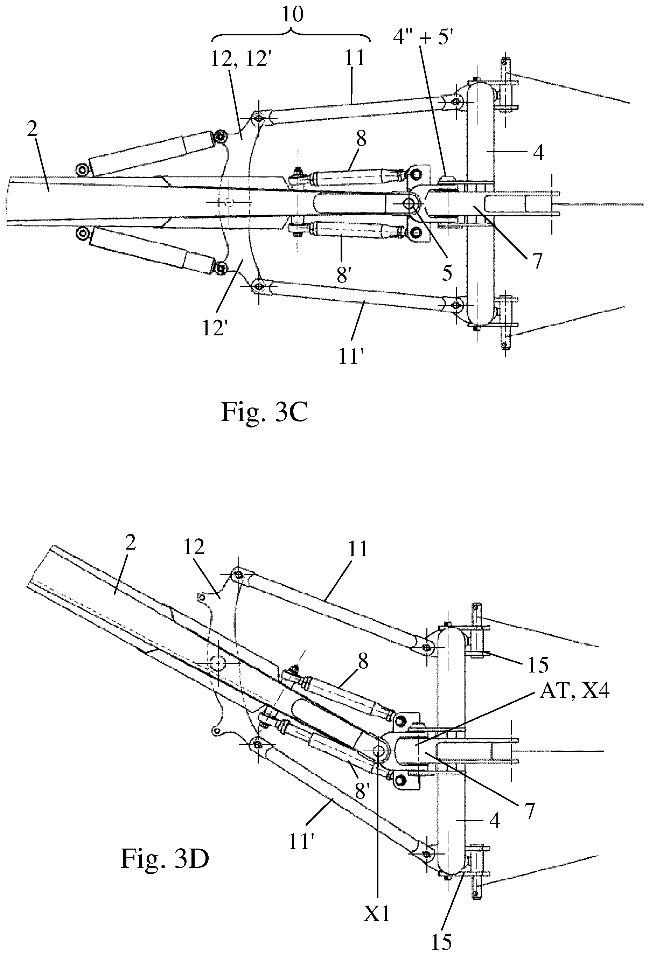

Les figures 1, 2 et partiellement les figures 3 à 8 montrent une machine agricole 1, notamment pour la récolte des fourrages et/ou le traitement des végétaux coupés, comprenant un élément support allongé 2 tel qu'un timon ou analogue, portant directement ou indirectement au moins un outil de travail 3, et un bâti ou cadre d'attelage 4 pour un accouplement de la machine agricole à un dispositif de relevage à trois points d'un véhicule tracteur et porteur, l'élément support allongé 2 étant relié au bâti d'attelage 4 par une liaison pivot 5 à axe X1 sensiblement vertical et/ou sensiblement perpendiculaire à l'axe de pivotement X2 des deux points inférieurs 4' d'accouplement avec le dispositif de relevage, ladite machine 1 pouvant être déplacée entre une position abaissée de travail et une position relevée de transport ou de manoeuvre.

Un dispositif 6 de centrage ou d'alignement est prévu pour déplacer et maintenir l'élément support allongé 2 à une position angulaire déterminée autour de la liaison pivot 5 avec le bâti d'attelage 4, préférentiellement de telle manière que ledit élément support allongé 2 soit sensiblement aligné avec l'axe médian X3 du véhicule tracteur (généralement confondu avec la direction d'avancement de ce véhicule).

Ledit dispositif de centrage ou d'alignement comprend une pièce de liaison 7 destinée à relier le bâti d'attelage 4 au point d'accouplement supérieur du dispositif de relevage par l'intermédiaire d'une première partie constitutive 7' et montée sur ledit bâti d'attelage 4 avec faculté de pivotement autour d'un axe transversal AT, préférentiellement sensiblement parallèle à l'axe de pivotement commun X2 des deux points d'accouplement inférieurs 4' du bâti d'attelage 4 avec le dispositif de relevage.

Dans le mode de réalisation représenté sur les figures annexées, le bâti d'attelage 4 consiste en un arceau d'un seul tenant (en forme de U renversé) dont les extrémités des branches portent les deux points d'accouplement inférieurs 4' et dont la partie sommitale comporte le site de montage articulé (liaison pivot 4" d'axe AT) pour la pièce de liaison 7.

Les points d'accouplement inférieurs 4' peuvent comprendre des chapes 15 montées sur les extrémités de l'arceau 4 et fournissant des liaisons pivot alignées d'axe commun X2 (voir figures 3 et 5 à 8). En variante, des liaisons rotulantes peuvent être prévues directement au niveau de ces extrémités de l'arceau 4 (non représenté).

Néanmoins, d'autres formes et constitutions sont possibles pour le bâti d'attelage 4.

Conformément à l'invention, une seconde partie 7" de la pièce de liaison 7, s'étendant à l'opposé de la première partie 7' par rapport à l'axe de pivotement AT de cette pièce 7, est reliée fonctionnellement à deux organes 8, 8' aptes à solliciter en rotation de manière antagoniste l'élément support allongé 2 autour de sa liaison pivot 5 avec le bâti d'attelage 4, lesdits organes 8, 8' autorisant une libre rotation dudit élément allongé 2 en position abaissée ou de travail de la machine agricole 1 et lesdits organes 8, 8' déplaçant et maintenant l'élément support allongé 2 dans sa position angulaire déterminée en position relevée de transport ou de manoeuvre de ladite machine 1, les états et actions desdits organes 8, 8' étant commandés directement ou indirectement par la pièce de liaison 7 dont la position angulaire autour de son axe de pivotement AT est fonction de la position verticale de la machine agricole 1 par rapport au sol.

Ainsi, le dispositif de centrage 6 de l'invention utilise directement le déplacement de la pièce de liaison 7 d'un seul tenant formant bascule, généré sous l'effet du levage ou de l'abaissement de la machine 1 par le dispositif de relevage du véhicule tracteur 1', plus précisément le mouvement de la bielle supérieure 16 fournissant le (troisième) point d'accouplement supérieur 16'.

Le dispositif de centrage 6 présente ainsi une construction et un fonctionnement simples, robustes et fiables. Il réalise simultanément le centrage et le verrouillage en position centrée et peut autoriser un débattement libre important de l'élément support allongé 2, autour de la position centrée (position dans laquelle l'axe longitudinal de l'élément 2 est généralement aligné avec l'axe X3 du tracteur 1', ou éventuellement au moins parallèle à cet axe), en position abaissée de la machine agricole 1.

Préférentiellement, les deux organes antagonistes 8, 8' de positionnement de l'élément support allongé 2 aptes à assurer son centrage et son blocage en position centrée sont du même type et positionnés de manière sensiblement symétrique par rapport à l'élément support allongé 2, ces deux organes 8, 8' bloquant et verrouillant ce dernier dans la position angulaire déterminée en position relevée de la machine agricole 1, éventuellement avec un léger jeu élastique et préférentiellement jusqu'à concurrence d'une valeur seuil de couple sollicitant ledit élément 2 en dehors de sa position verrouillée.

La réalisation matérielle des organes 8, 8' aux actions antagonistes et leur mode de commande par la pièce formant bascule 7 peuvent se présenter sous différentes formes.

Ainsi, en accord avec une première variante représentée aux figures 3 à 6 des dessins annexées, les deux organes antagonistes 8, 8' consistent en des barres télescopiques, reliant directement la seconde partie 7" de la pièce de liaison 7 à deux côtés opposés de l'élément support allongé 2 et sollicitées directement en traction ou en poussée par la pièce de liaison formant bascule 7, lors de son pivotement forcé résultant automatiquement du relevage de la machine agricole 1, lesdites barres télescopiques 8, 8' étant préférentiellement pourvues de butées 8" internes ou externes, éventuellement réglables (réglage des courses relatives possibles pour les parties coopérantes des barres 8, 8').

La solidarisation articulée des barres télescopiques 8 et 8' avec la pièce de liaison 7 et avec le timon 2 est avantageusement réalisée par l'intermédiaire de liaison rotules.

En outre, cette solidarisation avec le timon 2 peut être directe ou s'effectuer par l'intermédiaire d'une pièce 2' fixée rigidement sur ledit timon 2 (en fonction éventuellement de la taille des organes 8, 8' ou de l'ampleur du débattement de la bascule 7).

Sa conformation, sa taille, son mode de montage et le rapport des distances des points de liaisons des première et seconde parties 7' et 7" par rapport à l'axe AT déterminent le mode de fonctionnement (poussée / traction), l'ampleur du débattement et l'intensité de la force transmise aux organes 8, 8' pour la bascule 7.

En plus de la position des butées 8", la longueur des organes 8, 8' peut éventuellement également être réglable.

Selon une deuxième variante illustrée par les figures 7, les deux organes antagonistes 8, 8' consistent en des liens flexibles tels que des câbles, des sangles, des chaines ou analogues, reliant directement la seconde partie 7" de la pièce de liaison 7 à deux côtés opposés de l'élément support allongé 2 et sollicités directement en traction, éventuellement avec renvoi, par la pièce de liaison 7 formant bascule, lors de son pivotement forcé résultant automatiquement du relevage de la machine agricole 1.

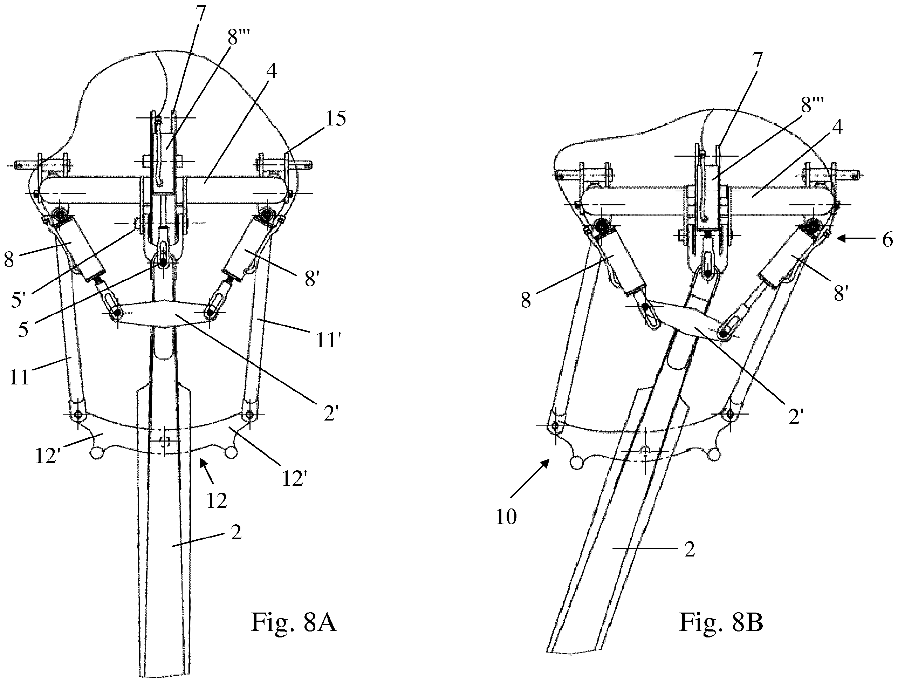

Enfin, selon une troisième variante possible représentée schématiquement aux figures 8, il peut être prévu que les deux organes antagonistes 8, 8' consistent en des vérins ou des actionneurs hydrauliques analogues, aptes à déplacer en rotation l'élément support allongé 2 selon deux sens opposés autour de sa liaison pivot 5 avec le bâti d'attelage 4, ces deux vérins étant connectés fluidiquement à un vérin de commande ou un organe hydraulique maître analogue 8'" en formant avec ce dernier un circuit fluidique autonome, l'état ou la position dudit vérin de commande ou dudit organe maître étant défini(e) par la position en rotation de la pièce de liaison 7 autour de son axe de pivotement AT résultant directement de l'état relevé ou abaissé de la machine agricole 1.

Les deux vérins actionneurs antagonistes de recentrage 8 et 8' forment ainsi, avec le vérin de commande ou l'organe maître 8''', un circuit fluidique fermé, indépendant de tout autre circuit hydraulique éventuel, propre à la machine agricole 1 et non connecté à celui du véhicule tracteur.

Comme illustré à titre d'exemple sur les figures 8A et 8B, le mouvement de pivotement de la pièce 7 formant bascule, généré automatiquement par le déplacement de la bielle d'attelage 16 fournissant le point supérieur d'accouplement 16' côté tracteur 1', provoque un déplacement d'un volume d'huile dans ledit circuit hydraulique fermé entre le vérin de commande 8'" et les deux vérins d'actionnement 8 et 8' reliés au timon 2 (par l'intermédiaire de la pièce 2'). L'avantage de cette solution hydraulique réside, en particulier, dans la grande flexibilité d'installation des différents organes.

Le vérin ou l'organe 8'" peut, comme représenté schématiquement sur les figures 8A et 8B, être directement monté sur la première partie 7' de la bascule 7 ou, de manière alternative, être relié cinématiquement à cette partie par une liaison articulée (non représentée).

L'organe de commande ou maître 8'" peut, en position abaissée de la machine 1, autoriser une libre circulation de fluide hydraulique entre les deux vérins antagonistes 8, 8'.

Comme le montrent également les figures 8A et 8B, ces derniers sont avantageusement reliés au timon 2 par l'intermédiaire d'une pièce 2' formant platine de manoeuvre et solidarisée rigidement audit timon 2, ce au moyen de liaisons pivotantes à axes présentant une faculté de translation limitée (trous oblongs).

Bien entendu, si un verrouillage supplémentaire est souhaité en position centrée, pour assujettir physiquement le timon 2 dans cette position, un moyen de verrouillage mécanique peut être prévu additionnellement (non représenté).

En relation avec la première variante de réalisation, le fonctionnement du dispositif de centrage 6 est comme suit : en position abaissée de travail de la machine agricole 1, la première partie avant 7' de la bascule 7 est relevée et les deux barres 8, 8' sont alors "flottantes" et le timon 2 peut ainsi librement pivoter autour de l'axe d'articulation vertical X1, dans la plage rotatoire délimitée par les possibilités de libre coulissement des deux barres télescopiques 8, 8'. Quand les bras d'attelage inférieurs du tracteur sont relevés, la bielle supérieure d'attelage exerce une traction vers l'avant et vers le bas qui conduit la partie avant 7" de la bascule 7 à pivoter vers le bas. Conséquemment, sa seconde partie arrière 7", du fait de la conformation de la pièce 7, pousse sur les barres télescopiques 8, 8' de sorte que celles-ci viennent dans une configuration d'allongement minimal du fait de leurs butées internes. Il s'ensuit le recentrage du timon 2 quelle que soit sa position angulaire initiale dans une fourchette déterminée (et par exemple au moins dans une fourchette de plus ou moins 15°, préférentiellement plus ou moins 30°, et de manière très préférée plus ou moins 45°, autour de la position centrée).

Quelle que soit la position angulaire du timon 2 (inclinaison par rapport à la position centrée) dans la plage de libre mouvement autorisée en position abaissée, les organes 8, 8' ramènent automatiquement ledit timon 2 en position centrée lors du relevage, réalisant ainsi un centrage forcé. Ce dispositif 6 est efficace même si la machine 1 est en dévers.

Pour permettre à l'élément support allongé 2 de se déplacer verticalement par rapport au bâti d'attelage 4, la liaison entre l'élément support allongé 2 et le bâti d'attelage 4 peut comprendre une seconde liaison pivot 5' autour d'un axe transversal X4, sensiblement parallèle à l'axe de pivotement X2 défini par les deux points d'accouplement inférieurs 4' avec le dispositif de relevage. Ce degré de liberté supplémentaire pour le timon 2 se justifie en particulier sur une machine 1 de grandes dimensions ou dont la distance entre le tracteur et les outils de râtelage est importante. Dans ce cas, l'axe transversal X4 assure un meilleur suivi de terrain, notamment en l'absence de chape au niveau du dispositif d'attelage (points d'accouplement inférieurs 4').

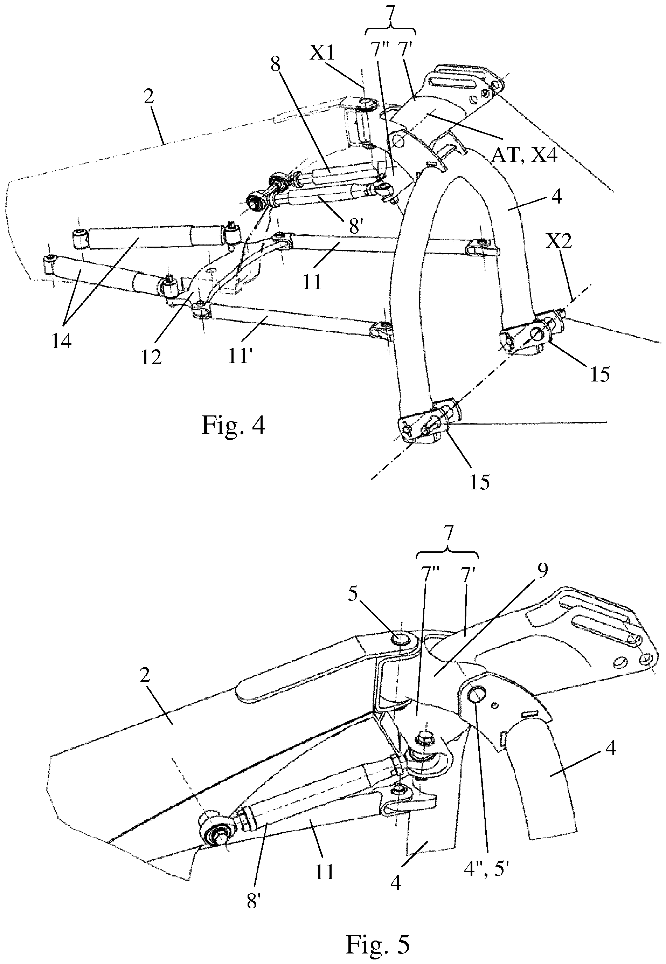

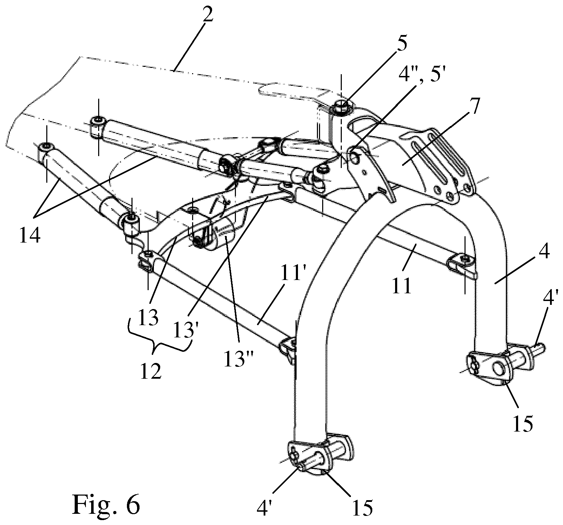

Avantageusement, en cas de faculté de pivotement double du timon 2 (autour d'un axe vertical X1 et autour d'un axe horizontal X4), l'élément support 2 formant timon peut être relié au bâti d'attelage 4 par une pièce intermédiaire 9, solidarisée à chacun desdits élément 2 et bâti 4 par une liaison pivot 5, 5' à axe sensiblement vertical X1 ou à axe transversal X4 (figures 5 et 6).

Ainsi, un côté de la pièce intermédiaire 9 participe à la réalisation d'une liaison pivot 5 à axe vertical X1 et l'autre côté de cette pièce 9 participe à la réalisation d'une liaison pivot 5' à axe transversal ou horizontal X4, indifféremment avec la pièce 7 ou le timon 2.

Pour des considérations de simplification constructive et de gain en poids et d'encombrement, il peut être prévu que les axes de pivotement transversaux AT, X4 des liaisons articulées entre le bâti d'attelage 4, d'une part, et la pièce de liaison formant bascule 7 et l'élément support allongé 2 ou la pièce intermédiaire 9, d'autre part, soient confondus, c'est-à-dire que les sites de montage articulés 5 et 4" en pivotement du timon 2 ou de la pièce intermédiaire 9 sur le bâti d'attelage sont identiques.

Afin de réduire les contraintes en flexion subies par l'élément de support allongé ou timon 2 en position relevée de la machine agricole 1, cette dernière peut, comme le montrent notamment les figures 4, 6 et 7, comprendre également un dispositif de triangulation de l'élément support allongé 2, reliant en partie inférieure ce dernier au bâti d'attelage 4 et essentiellement composé de deux biellettes 11, 11' solidarisées audit bâti 4 et d'une platine d'articulation 12 solidarisée audit élément 2 et présentant deux bras latéraux 12' auxquels sont reliés les biellettes 11, 11', lesdites liaisons de solidarisation, ainsi que celles entre les biellettes 11, 11' et la platine 12 étant du type articulation à pivot.

Ce dispositif de triangulation 10 assure ainsi une fonction de report de charge (pour la partie du timon 2 assemblée avec le bâti), mais par contre ne contribue pas au recentrage du timon 2.

Selon une variante de réalisation ressortant de la figure 7 des dessins annexées, il peut être prévu que la platine d'articulation 12 soit composée de deux parties 13, 13' en forme de plaques, montées à pivotement sur l'élément support allongé 2, mobiles l'une par rapport à l'autre et reliées entre elles par un moyen élastique ou ressort 13" destiné à limiter les mouvements verticaux au moins de l'élément support allongé 2.

Conformément à une caractéristique additionnelle de l'invention, illustrée aux figures 4 et 6, le dispositif de triangulation 10 peut comprendre également au moins un moyen amortisseur 14, par exemple sous forme de vérin hydraulique ou pneumatique, reliant un des bras 12' de la platine d'articulation 12 à l'élément support allongé 2, à l'opposé des biellettes 11, 11' et formant dispositif de limitation des mouvements latéraux dudit élément support allongé 2 pendant les phases de travail.

Pour que la fonction soit réalisée de manière symétrique, chacun des deux bras 12' opposés de la platine 12 peut être connecté par un moyen amortisseur 14 à un des côtés latéraux du timon 2, de part et d'autre de l'axe longitudinal de ce dernier (voir figures 4 et 6).

Alternativement, la fonction peut également être réalisée de manière symétrique avec un unique moyen 14 (comme représenté), lorsque ce dernier est à double effet ou à action positive bidirectionnelle.

Enfin, selon une disposition complémentaire de l'invention ressortant de l'exposé précédent en relation avec la variante de réalisation représentée figure 7 à titre d'exemple, le dispositif 6 de centrage et de verrouillage en position centrée, le moyen 13" de limitation des mouvements verticaux de l'élément allongé et le dispositif de triangulation 10 limitant les mouvements latéraux sont découplés entre eux.

L'invention concerne également, comme représenté schématiquement sur la figure 2, un ensemble fonctionnel formé d'un engin ou véhicule tracteur 1' et d'une machine agricole 1 solidarisé au dispositif de relevage à trois points de l'engin ou véhicule tracteur 1, ladite machine agricole pouvant être déplacée entre une position abaissée ou de travail et une position relevée de transport ou de manoeuvre. Cet ensemble fonctionnel caractérisé en ce que la machine agricole est une machine agricole 1 telle que décrite précédemment.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention comme revendiquée.

## Revendications

1. Machine agricole (1), notamment pour la récolte des fourrages et/ou le traitement des végétaux coupés, comprenant un élément support allongé (2) tel qu'un timon ou analogue, portant directement ou indirectement au moins un outil de travail (3), et un bâti ou cadre d'attelage (4) pour un accouplement de la machine agricole à un dispositif de relevage à trois points d'un véhicule tracteur et porteur, l'élément support allongé (2) étant relié au bâti d'attelage (4) par une liaison pivot (5) à axe (X1) sensiblement vertical et/ou sensiblement perpendiculaire à l'axe de pivotement (X2) des deux points d'accouplement inférieurs (4') avec le dispositif de relevage,
ladite machine (1) pouvant être déplacée entre une position abaissée de travail et une position relevée de transport ou de manoeuvre, un dispositif (6) de centrage ou d'alignement étant prévu pour déplacer et maintenir l'élément support allongé (2) à une position angulaire déterminée autour de la liaison pivot (5) avec le bâti d'attelage (4), de telle manière que ledit élément support allongé (2) soit sensiblement aligné avec l'axe médian (X3) du véhicule tracteur,
ledit dispositif de centrage ou d'alignement (6) comprenant une pièce de liaison (7) destinée à relier le bâti d'attelage (4) au point d'accouplement supérieur du dispositif de relevage par l'intermédiaire d'une première partie constitutive (7') et montée sur ledit bâti d'attelage (4) avec faculté de pivotement autour d'un axe transversal (AT), sensiblement parallèle à l'axe de pivotement commun (X2) des deux points d'accouplement inférieurs (4') du bâti d'attelage (4) avec le dispositif de relevage,
machine agricole (1) **caractérisée en ce qu'**une seconde partie (7") de la pièce de liaison (7), s'étendant à l'opposé de la première partie (7') par rapport à l'axe de pivotement (AT) de cette pièce (7), est reliée fonctionnellement à deux organes (8, 8') aptes à solliciter en rotation de manière antagoniste l'élément support allongé (2) autour de sa liaison pivot (5) avec le bâti d'attelage (4), lesdits organes (8, 8') autorisant une libre rotation dudit élément allongé (2) en position abaissée ou de travail de la machine agricole (1) et lesdits organes (8, 8') déplaçant et maintenant l'élément support allongé (2) dans sa position angulaire déterminée en position relevée de transport ou de manoeuvre de ladite machine (1), les états et actions desdits organes (8, 8') étant commandés directement ou indirectement par la pièce de liaison (7) dont la position angulaire autour de son axe de pivotement (AT) est fonction de la position verticale de la machine agricole (1) par rapport au sol.

2. Machine agricole selon la revendication 1, **caractérisée en ce que** la liaison entre l'élément support allongé (2) et le bâti d'attelage (4) comprend une seconde liaison pivot (5') autour d'un axe transversal (X4), sensiblement parallèle à l'axe de pivotement (X2) défini par les deux points d'accouplement inférieurs (4') avec le dispositif de relevage.

3. Machine agricole selon l'une quelconque des revendications 1 et 2, **caractérisée en ce que** l'élément support allongé (2) est relié au bâti d'attelage (4) par une pièce intermédiaire (9), solidarisée à chacun desdits élément (2) et bâti (4) par la liaison pivot (5) à axe sensiblement vertical (X1) ou par une liaison pivot (5') à axe transversal (X4).

4. Machine agricole selon l'une quelconque des revendications 2 et 3, **caractérisée en ce que** les axes de pivotement transversaux (AT, X4) des liaisons articulées entre le bâti d'attelage (4), d'une part, et la pièce de liaison formant bascule (7) et l'élément support allongé (2) ou la pièce intermédiaire (9), d'autre part, sont confondus.

5. Machine agricole selon l'une quelconque des revendications 1 à 4, **caractérisée en ce que** les deux organes antagonistes (8, 8') de positionnement de l'élément support allongé (2) aptes à assurer son centrage et son blocage en position centrée sont du même type et positionnés de manière sensiblement symétrique par rapport à l'élément support allongé (2), ces deux organes (8, 8') bloquant et verrouillant ce dernier dans la position angulaire déterminée en position relevée de la machine agricole (1), éventuellement avec un léger jeu élastique et préférentiellement jusqu'à concurrence d'une valeur seuil de couple sollicitant ledit élément (2) en dehors de sa position verrouillée.

6. Machine agricole selon l'une quelconque des revendications 1 à 5, **caractérisée en ce que** les deux organes antagonistes (8, 8') consistent en des barres télescopiques, reliant directement la seconde partie (7") de la pièce de liaison (7) à deux côtés opposés de l'élément support allongé (2) et sollicitées directement en traction ou en poussée par la pièce de liaison formant bascule (7), lors de son pivotement forcé résultant automatiquement du relevage de la machine agricole (1), lesdites barres télescopiques (8, 8') étant préférentiellement pourvues de butées (8") internes ou externes, éventuellement réglables.

7. Machine agricole selon l'une quelconque des revendications 1 à 5, **caractérisée en ce que** les deux organes antagonistes (8, 8') consistent en des liens flexibles tels que des câbles, des sangles, des chaines ou analogues, reliant directement la seconde partie (7") de la pièce de liaison (7) à deux côtés opposés de l'élément support allongé (2) et sollicités directement en traction, éventuellement avec renvoi, par la pièce de liaison (7) formant bascule, lors de son pivotement forcé résultant automatiquement du relevage de la machine agricole (1).

8. Machine agricole selon l'une quelconque des revendications 1 à 5, **caractérisée en ce que** les deux organes antagonistes (8, 8') consistent en des vérins ou des actionneurs hydrauliques analogues, aptes à déplacer en rotation l'élément support allongé (2) selon deux sens opposés autour de sa liaison pivot (5) avec le bâti d'attelage (4), ces deux vérins (8, 8') étant connectés fluidiquement à un vérin de commande ou un organe hydraulique maître analogue (8'''), en formant avec ce dernier un circuit fluidique autonome, l'état ou la position dudit vérin de commande ou organe maître analogue (8''') étant défini(e) par la position en rotation de la pièce de liaison (7) autour de son axe de pivotement (AT), résultant directement de l'état relevé ou abaissé de la machine agricole (1).

9. Machine agricole selon l'une quelconque des revendications 1 à 8, **caractérisée en ce qu'**elle comprend également un dispositif de triangulation de l'élément support allongé (2), reliant en partie inférieure ce dernier au bâti d'attelage (4) et essentiellement composé de deux biellettes (11, 11') solidarisées audit bâti (4) et d'une platine d'articulation (12) solidarisée audit élément (2) et présentant deux bras latéraux (12') auxquels sont reliés les biellettes (11, 11'), lesdites solidarisations, ainsi que celles entre les biellettes (11, 11') et la platine (12) étant du type articulation à pivot.

10. Machine agricole selon la revendication 9, **caractérisée en ce que** la platine d'articulation (12) est composée de deux parties (13, 13') en forme de plaques, montées à pivotement sur l'élément support allongé (2), mobiles l'une par rapport à l'autre et reliées entre elles par un moyen élastique ou ressort (13") destiné à limiter les mouvements verticaux au moins de l'élément support allongé (2).

11. Machine agricole selon l'une quelconque des revendications 9 et 10, **caractérisée en ce que** le dispositif de triangulation (10) comprend également au moins un moyen amortisseur (14), par exemple sous forme de vérin hydraulique ou pneumatique, reliant un des bras (12') de la platine d'articulation (12) à l'élément support allongé (2), à l'opposé des biellettes (11, 11') et formant dispositif de limitation des mouvements latéraux dudit élément support allongé (2) pendant les phases de travail.

12. Machine agricole selon les revendications 10 et 11, **caractérisée en ce que** le dispositif (6) de centrage et de verrouillage en position centrée, le moyen (13") de limitation des mouvements verticaux de l'élément allongé et le dispositif de triangulation (10) limitant les mouvements latéraux sont découplés entre eux.

13. Ensemble fonctionnel formé d'un engin ou véhicule tracteur et d'une machine agricole solidarisé au dispositif de relevage à trois points de l'engin ou véhicule tracteur, ladite machine agricole pouvant être déplacée entre une position abaissée ou de travail et une position relevée de transport ou de manoeuvre, ensemble fonctionnel **caractérisé en ce que** la machine agricole est une machine agricole (1) selon l'une quelconque des revendications 1 à 12.

## Patentansprüche

1. Landwirtschaftliche Maschine (1), insbesondere zur Futterernte und/oder zur Behandlung von geschnittenen Pflanzen, umfassend ein längliches Trägerelement (2) wie beispielsweise eine Deichsel oder Ähnliches, das direkt oder indirekt mindestens ein Arbeitsgerät (3) trägt, und einen Anbaubock oder - rahmen (4) zum Ankuppeln der landwirtschaftlichen Maschine an eine Dreipunkthebevorrichtung eines Zug- und Trägerfahrzeugs, wobei das längliche Trägerelement (2) mit dem Anbaubock (4) mittels einer Schwenkverbindung (5) an einer Achse (X1) im Wesentlichen vertikal und/oder im Wesentlichen senkrecht zu der Schwenkachse (X2) der beiden unteren Kupplungspunkte (4') mit der Hebevorrichtung verbunden ist,
wobei die Maschine (1) zwischen einer abgesenkten Arbeitsposition und einer erhöhten Transport- oder Manövrierposition bewegt werden kann, wobei eine Vorrichtung (6) zur Zentrierung oder zur Ausrichtung vorgesehen ist, um das längliche Trägerelement (2) an eine bestimmte Winkelposition um die Schwenkverbindung (5) mit dem Anbaubock (4) zu bewegen und darin zu halten, derart, dass das längliche Trägerelement (2) im Wesentlichen mit der Mittelachse (X3) des Zugfahrzeugs ausgerichtet ist,
wobei die Zentrier- oder Ausrichtungsvorrichtung (6) ein Verbindungsstück (7) umfasst, das dazu bestimmt ist, den Anbaubock (4) mittels eines ersten Bestandteils (7') mit dem oberen Kupplungspunkt der Hebevorrichtung zu verbinden, und das um eine Querachse (AT), die im Wesentlichen parallel zu der gemeinsamen Schwenkachse (X2) der beiden unteren Kupplungspunkte (4') des Anbaubocks (4) mit der Hebevorrichtung ist, schwenkbar an dem Anbaubock (4) montiert ist,
wobei die landwirtschaftliche Maschine (1) **dadurch gekennzeichnet ist, dass** ein zweiter Abschnitt (7") des Verbindungsstücks (7) sich in Bezug auf die Schwenkachse (AT) dieses Stücks (7) entgegengesetzt zu dem ersten Abschnitt (7') erstreckt, betriebsmäßig mit zwei Elementen (8, 8') verbunden ist, die dazu angepasst sind, das längliche Trägerelement (2) um seine Schwenkverbindung (5) mit dem Anbaubock (4) gegenwirkend drehend vorzuspannen, wobei die Elemente (8, 8') eine freie Drehung des länglichen Elements (2) in abgesenkter oder Arbeitsposition der landwirtschaftlichen Maschine (1) zulassen und die Elemente (8, 8') das längliche Trägerelement (2) in seine bestimmte Winkelposition in erhöhter Transport- oder Manövrierposition der Maschine (1) bewegen und darin halten, wobei die Zustände und Wirkungen der Elemente (8, 8') direkt oder indirekt mittels des Verbindungsstücks (7) gesteuert werden, dessen Winkelposition um seine Schwenkachse (AT) von der vertikalen Position der landwirtschaftlichen Maschine (1) in Bezug auf den Boden abhängt.

2. Landwirtschaftliche Maschine nach Anspruch 1, **dadurch gekennzeichnet, dass** die Verbindung zwischen dem länglichen Trägerelement (2) und dem Anbaubock (4) eine zweite Schwenkverbindung (5') um eine Querachse (X4) im Wesentlichen parallel zu der Schwenkachse (X2) umfasst, die von den beiden unteren Kupplungspunkten (4') mit der Hebevorrichtung definiert wird.

3. Landwirtschaftliche Maschine nach einem der Ansprüche 1 und 2, **dadurch gekennzeichnet, dass** das längliche Trägerelement (2) mittels eines Zwischenstücks (9) mit dem Anbaubock verbunden ist, das mittels der Schwenkverbindung (5) mit im Wesentlichen vertikaler Achse (X1) oder mittels einer Schwenkverbindung (5') mit Querachse (X4) sowohl mit dem Element (2) als auch mit dem Bock (4) fest verbunden ist.

4. Landwirtschaftliche Maschine nach einem der Ansprüche 2 und 3, **dadurch gekennzeichnet, dass** die Querschwenkachsen (AT, X4) der Gelenkverbindungen zwischen dem Anbaubock (4) zum einen und dem als Wippe ausgebildeten Verbindungsstück (7) und dem länglichen Trägerelement (2) oder dem Zwischenstück (9) zum anderen, vereinigt sind.

5. Landwirtschaftliche Maschine nach einem der Ansprüche 1 bis 4, **dadurch gekennzeichnet, dass** die beiden Gegenelemente (8, 8') zur Positionierung des länglichen Trägerelements (2), die dazu angepasst sind, seine Zentrierung und seine Blockierung in zentrierter Position sicherzustellen, derselben Art sind und in Bezug auf das längliche Trägerelement (2) im Wesentlichen in symmetrischer Weise positioniert sind, wobei diese beiden Elemente (8, 8') das letztere in der bestimmten Winkelposition in zur landwirtschaftlichen Maschine (1) erhöhter Position blockieren und verriegeln, gegebenenfalls mit einem leichten elastischen Spiel und vorzugsweise bis zu einem Drehmomentgrenzwert, der das Element (2) aus seiner verriegelten Position drängt.

6. Landwirtschaftliche Maschine nach einem der Ansprüche 1 bis 5, **dadurch gekennzeichnet, dass** die beiden Gegenelemente (8, 8') aus Teleskopstangen bestehen, die den zweiten Abschnitt (7") des Verbindungsstücks (7) direkt mit zwei gegenüberliegenden Seiten des länglichen Trägerelements (2) verbinden und die von dem als Wippe ausgebildeten Verbindungsstück (7) bei seiner erzwungenen Schwenkung, die sich automatisch aus dem Anheben der landwirtschaftlichen Maschine (1) ergibt, direkt auf Zug oder Schub beansprucht werden, wobei die Teleskopstangen (8, 8') vorzugsweise mit internen oder externen, gegebenenfalls einstellbaren Anschlägen (8") versehen sind.

7. Landwirtschaftliche Maschine nach einem der Ansprüche 1 bis 5, **dadurch gekennzeichnet, dass** die beiden Gegenelemente (8, 8') aus flexiblen Verbindungen wie Leitungen, Gurten, Ketten oder Ähnlichem bestehen, die den zweiten Abschnitt (7") des Verbindungsstücks (7) direkt mit zwei gegenüberliegenden Seiten des länglichen Trägerelements (2) verbinden und die von dem als Wippe ausgebildeten Verbindungsstück (7) bei seiner erzwungenen Schwenkung, die sich automatisch aus dem Anheben der landwirtschaftlichen Maschine (1) ergibt, gegebenenfalls mit Umlenkung, direkt auf Zug beansprucht werden.

8. Landwirtschaftliche Maschine nach einem der Ansprüche 1 bis 5, **dadurch gekennzeichnet, dass** die beiden Gegenelemente (8, 8') aus Zylindern oder ähnlichen Hydraulikantrieben bestehen, die dazu angepasst sind, das längliche Trägerelement (2) in zwei entgegengesetzten Richtungen um seine Schwenkverbindung (5) mit dem Anbaubock (4) zu drehen, wobei diese beiden Zylinder (8 8') in Fluidverbindung mit einem Steuerzylinder oder ähnlichen hydraulischen Master-Element (8''') stehen, wobei sie mit diesem einen autonomen Fluidkreis bilden, wobei der Zustand oder die Position des Steuerzylinders oder des entsprechenden Master-Elements (8''') von der Drehposition des Verbindungsstücks (7) um seine Schwenkachse (AT) definiert wird, die sich direkt aus dem erhöhten oder abgesenkten Zustand der landwirtschaftlichen Maschine (1) ergibt.

9. Landwirtschaftliche Maschine nach einem der Ansprüche 1 bis 8, **dadurch gekennzeichnet, dass** sie außerdem eine Vorrichtung zur Triangulation des länglichen Trägerelements (2) umfasst, die dieses im unteren Bereich mit dem Anbaubock (4) verbindet und im Wesentlichen aus zwei Schubstangen (11, 11'), die fest mit dem Anbau (4) verbunden sind, und aus einer Gelenkplatte (12) besteht, die fest mit dem Element (2) verbunden ist und zwei Seitenarme (12') aufweist, mit denen die Schubstangen (11, 11') verbunden sind, wobei die Anbindungen sowie diejenigen zwischen den Schubstangen (11, 11') und der Platte (12) vom Schwenkgelenktyp sind.

10. Landwirtschaftliche Maschine nach Anspruch 9, **dadurch gekennzeichnet, dass** die Gelenkplatte (12) aus zwei Abschnitten (13, 13') in Form von Platten besteht, die schwenkbar an dem länglichen Trägerelement (2) montiert sind, die relativ zueinander beweglich sind und mittels eines elastischen Mittels oder einer Feder (13"), das dazu bestimmt ist, die vertikalen Bewegungen zumindest des länglichen Trägerelements (2) zu begrenzen, miteinander verbunden sind.

11. Landwirtschaftliche Maschine nach einem der Ansprüche 9 und 10, **dadurch gekennzeichnet, dass** die Triangulationsvorrichtung (10) außerdem, gegenüber von den Schubstangen (11, 11') und eine Vorrichtung zur Begrenzung der seitlichen Bewegungen des länglichen Trägerelements (2) während der Arbeitsphasen bildend, mindestens ein Dämpfungsmittel (14), beispielsweise in Form eines Hydraulik- oder Pneumatikzylinders umfasst, das einen der Arme (12') der Gelenkplatte (12) mit dem länglichen Trägerelement (2) verbindet.

12. Landwirtschaftliche Maschine nach Ansprüchen 10 und 11, **dadurch gekennzeichnet, dass** die Vorrichtung (6) zur Zentrierung und zur Verriegelung in zentrierter Position, das Mittel (13") zur Begrenzung der vertikalen Bewegungen des länglichen Elements und die Triangulationsvorrichtung (10), die die seitlichen Bewegungen begrenzt, voneinander entkoppelt sind.

13. Funktionsbaugruppe, gebildet aus einer Zugmaschine oder einem Zugfahrzeug und einer landwirtschaftlichen Maschine, die fest mit der Dreipunkthebevorrichtung der Zugmaschine oder des Zugfahrzeugs verbunden ist, wobei die landwirtschaftliche Maschine zwischen einer abgesenkten oder Arbeitsposition und einer erhöhten Transport- oder Manövrierposition bewegt werden kann, wobei die Funktionsbaugruppe **dadurch gekennzeichnet ist, dass** die landwirtschaftliche Maschine eine landwirtschaftliche Maschine (1) nach einem der Ansprüche 1 bis 12 ist.

## Claims

1. Agricultural machine (1), in particular for the harvesting of fodder and/or the processing of cut plant material, comprising an elongate support element (2) such as a draught beam or the like, directly or indirectly carrying at least one working implement (3), and a coupling frame (4) for coupling the agricultural machine to a three-point linkage of a towing and carrier vehicle, the elongate support element (2) being connected to the coupling frame (4) by a pivot link (5) with an axis (X1) substantially vertical and/or substantially perpendicular to the pivot axis (X2) of two lower coupling points (4') with the linkage,
said machine (1) being capable of being displaced between a lowered working position and a raised transport or manoeuvring position, a centring or alignment device (6) being provided for displacing and maintaining the elongate support element (2) in a given angular position about its pivot link (5) with the coupling frame (4), in such a way that said elongate support element (2) is substantially aligned with the median axis (X3) of the towing vehicle,
said centring or alignment device (6) comprising a connecting piece (7) designed to connect the coupling frame (4) to the upper coupling point of the linkage by means of a first constituent part (7') and mounted on said coupling frame (4) with the option of pivoting about a transverse axis (AT) which is substantially parallel to the common pivot axis (X2) of the two lower coupling points (4') of the coupling frame (4) with the linkage,
agricultural machine (1) **characterised in that** a second part (7") of the connecting piece (7), extending opposite to the first part (7') relative to the pivot axis (AT) of this piece (7), is functionally connected to two members (8, 8') capable of rotationally biasing the elongate support element (2) oppositely about its pivot link (5) with the coupling frame (4), said members (8, 8') authorising free rotation of said elongate element (2) in the lowered or working position of the agricultural machine (1) and said members (8, 8') displacing and maintaining the elongate support element (2) in its given angular position in the raised transport or manoeuvring position of said machine (1), the states and actions of said members (8, 8') being controlled directly or indirectly by the connecting piece (7) of which the angular position about its pivot axis (AT) is a function of the vertical position of the agricultural machine (1) relative to the ground.

2. Agricultural machine according to claim 1, **characterised in that** the link between the elongate support element (2) and the coupling frame (4) comprises a second pivot link (5') about a transverse axis (X4) which is substantially parallel to the pivot axis (X2) defined by the two lower coupling points (4') with the linkage.

3. Agricultural machine according to any one of claims 1 and 2, **characterised in that** the elongate support element (2) is connected to the coupling frame (4) by an intermediate piece (9) which is rigidly connected to each of said element (2) and frame (4) by the pivot link (5) with substantially vertical axis (X1) or by a pivot link (5') with transverse axis (X4).

4. Agricultural machine according to any one of claims 2 and 3, **characterised in that** the transverse pivot axes (AT, X4) of the links hinged between the coupling frame (4) on the one hand and the rocker-forming connecting piece (7) and the elongate support element (2) or the intermediate piece (9) on the other hand coincide.

5. Agricultural machine according to any one of claims 1 to 4, **characterised in that** the two opposing members (8, 8') for positioning the elongate support element (2) which are capable of ensuring that it is centred and blocked in the centred position are of the same type and positioned substantially symmetrically relative to the elongate support element (2), these two members (8, 8') blocking and locking the latter in the given angular position in the raised position of the agricultural machine (1), possibly with slight elastic play and preferably up to the amount of a threshold torque value biasing said element (2) outside its locked position.

6. Agricultural machine according to any one of claims 1 to 5, **characterised in that** the two opposing members (8, 8') consist of telescopic bars, directly connecting the second part (7") of the connecting piece (7) to two opposite sides of the elongate support element (2), and directly subjected to traction or thrust by the rocker-forming connecting piece (7), during forced pivoting thereof resulting automatically from raising of the agricultural machine (1), said telescopic bars (8, 8') being preferably provided with internal or external stops (8") which may be adjustable.

7. Agricultural machine according to any one of claims 1 to 5, **characterised in that** the two opposing members (8, 8') consist of flexible links such as cables, straps, chains or the like, directly connecting the second part (7") of the connecting piece (7) to two opposite sides of the elongate support element (2) and directly subjected to traction, possibly with return, by the rocker-forming connecting piece (7), during forced pivoting thereof resulting automatically from raising of the agricultural machine (1).

8. Agricultural machine according to any one of claims 1 to 5, **characterised in that** the two opposing members (8, 8') consist of hydraulic cylinders or the like actuators, capable of rotationally displacing the elongate support element (2) in two opposite directions about its pivot link (5) with the coupling frame (4), these two cylinders (8, 8') being connected in fluid relationship to a control cylinder or the like master hydraulic member (8'''), forming an autonomous fluid circuit with the latter, the state or position of said control cylinder or the like master member (8''') being defined by the rotational position of the connecting piece (7) about its pivot axis (AT), directly resulting from the raised or lowered state of the agricultural machine (1).

9. Agricultural machine according to any one of claims 1 to 8, **characterised in that** it also comprises a device for the triangulation of the elongate support element (2), in the lower part connecting the latter to the coupling frame (4) and essentially composed of two small connecting rods (11, 11') rigidly connected to said frame (4) and a hinge plate (12) which is rigidly connected to said element (2) and has two lateral arms (12') to which the small connecting rods (11, 11') are connected, said rigid connections, as well as those between the small connecting rods (11, 11') and the plate (12), being of the pivot joint type.

10. Agricultural machine according to claim 9, **characterised in that** the hinge plate (12) is composed of two parts (13, 13') in the form of plates mounted pivotably on the elongate support element (2), movable relative to each other and connected to each other by an elastic or spring means (13") designed to limit the vertical movements at least of the elongate support element (2).

11. Agricultural machine according to any one of claims 9 and 10, **characterised in that** the triangulation device (10) also comprises at least one shock absorber means (14), for example in the form of a hydraulic or pneumatic cylinder, connecting one of the arms (12') of the hinge plate (12) to the elongate support element (2), opposite to the small connecting rods (11, 11'), and forming a device for limiting the lateral movements of said elongate support element (2) during the working phases.

12. Agricultural machine according to claims 10 and 11, **characterised in that** the device (6) for centring and locking in the centred position, the means (13") for limiting the vertical movements of the elongate element and the triangulation device (10) which limits the lateral movements are decoupled from each other.

13. Functional assembly composed of a towing vehicle or machine and an agricultural machine rigidly connected to the three-point linkage of the towing vehicle or machine, said agricultural machine being capable of being displaced between a lowered working position and a raised transport or manoeuvring position, functional assembly **characterised in that** the agricultural machine is an agricultural machine (1) according to any one of claims 1 to 12.
